# EUROPEAN PATENT APPLICATION

(11) **EP 4 654 110 A1**
(43) Date of publication of application: **26.11.2025**
(21) Application number: 24201072.6
(22) Date of filing: 18.09.2024
(51) Int. Cl.: G06Q 20/32

(54) **MOBILE PAYMENT METHOD AND SYSTEM**

(30) Priority: 23.05.2024 TW 113119201
(71) Applicant: Leadot Innovation, Inc., Kaohsiung City 80266 (TW)
(72) Inventor: WANG, Justin, 80266 Kaohsiung City (TW)
(74) Representative: Zimmermann, Tankred Klaus

(57) **Abstract**

A mobile payment method, which includes steps of: starting a universal payment application; retrieving a mobile payment code, wherein the mobile payment code is a non-agreed payment code, and the non-agreed payment code is generated not corresponding to the universal payment application, and is not recognizable by the universal payment application; and the universal payment application providing a payment interface based on the retrieved mobile payment code. When the mobile payment code is the non-agreed payment code, the payment interface at least includes a financial transaction trigger link and/or a universal payment link. A mobile payment system applying the mobile payment method is also provided.

## Description

### BACKGROUND

### Technology Field

The present invention relates to a payment method and a payment system. In particular, this invention relates to a mobile payment method and a mobile payment system.

### Description of Related Art

In recent years, mobile payments for consumption have become one of the main payment methods. Generally, as long as a mobile device, such as a mobile phone, a tablet computer, a smart watch, etc., is used as a carrier, and is further added or bound with credit cards, debit cards, bank accounts, prepaid accounts, discount coupons, or the likes for deduction or payment, all these actions can be referred to mobile payments.

For example, when consumers make purchases in stores, they can use their mobile devices to scan codes, such as one-dimensional codes (barcodes) or two-dimensional codes (QR codes), and then finish mobile payments through appropriate mobile payment platforms. In order to successfully complete the mobile payment action, the prerequisite is that both the consumer and the store use the same mobile payment platform. For example, the store provides the mobile payment code (e.g. QR code) of a mobile payment platform A, and the consumer's mobile device must be installed with a mobile payment application A corresponding to the mobile payment platform A, so that the mobile payment action can be successfully completed. In other words, if the store only provides the mobile payment code of the mobile payment platform A, but the mobile payment application A is not installed on the consumer's mobile device, the mobile payment action cannot be performed.

In order to avoid the above-mentioned situation of failing to perform the mobile payment action, the consumer may have to install multiple mobile payment applications on his/her mobile device and apply for corresponding accounts, and stores must apply to different mobile payment platforms to obtain the corresponding multiple mobile payment codes. However, regarding today's booming mobile payment business, there are dozens of mobile payment platforms on the market, such as Apple Pay, Google Pay, TW Pay, Paypal, Line Pay, Fami Pay, PX Pay, JKO Pay, and the likes. Whether for stores or consumers, especially for consumers, no matter to install multiple mobile payment applications and to apply for corresponding accounts, or to apply for multiple mobile payment codes for different mobile payment platforms, all are quite complicated and troublesome processes.

Therefore, it is desired to provide a mobile payment method and system that can be used in different mobile payment platforms.

### SUMMARY

In view of the foregoing, an objective of this invention is to provide a mobile payment method and system that can be applied to various mobile payment platforms with one single payment application, and in particular, can be used in any mobile payment platform without agreement or contract in advance.

To achieve the above, a mobile payment method of this invention includes the following steps of: starting a universal payment application; retrieving a mobile payment code, wherein the mobile payment code is a non-agreed payment code, and the non-agreed payment code is generated not corresponding to the universal payment application, and is not recognizable by the universal payment application; and the universal payment application providing a payment interface based on the retrieved mobile payment code. When the mobile payment code is the non-agreed payment code, the payment interface at least includes a financial transaction trigger link and/or a universal payment link.

In one embodiment, the mobile payment code is a bar code or a QR code.

In one embodiment, the step of retrieving the mobile payment code is to retrieve the mobile payment code by an image capturing method or by a wireless communication method.

In one embodiment, the financial transaction trigger link corresponds to a credit card transaction, a debit card transaction, a prepaid card transaction, a bank transfer transaction, or a prepaid account transaction.

In one embodiment, the mobile payment method further includes steps of: when the universal payment link is selected, performing a mobile payment through a universal payment platform corresponding to the universal payment application; and when the financial transaction trigger link is selected, performing the mobile payment through the universal payment platform or through a financial transaction platform corresponding to the financial transaction trigger link.

In one embodiment, the mobile payment code is a universal payment code, an agreed payment code or the non-agreed payment code. The universal payment code is generated corresponding to the universal payment application, and the agreed payment code is generated not corresponding to the universal payment application but is recognizable by the universal payment application. When the mobile payment code is the universal payment code, the payment interface at least includes the universal payment link. When the mobile payment code is the agreed payment code, the payment interface at least includes the universal payment link and/or an agreed payment trigger link.

In one embodiment, the mobile payment method further includes steps of: when the universal payment link is selected, performing a mobile payment through a universal payment platform corresponding to the universal payment application; when the agreed payment trigger link is selected, activating an agreed payment application corresponding to the agreed payment code to perform the mobile payment, or performing the mobile payment through the universal payment platform; and when the financial transaction trigger link is selected, performing the mobile payment through the universal payment platform or through a financial transaction platform corresponding to the financial transaction trigger link.

To achieve the above, a mobile payment system of this invention includes a mobile payment code and an electronic mobile device. The mobile payment code is assigned to a first transaction party, and the mobile payment code is a non-agreed payment code. The electronic mobile device is assigned to a second transaction party and is installed with a universal payment application. The non-agreed payment code is generated not corresponding to the universal payment application, and is not recognizable by the universal payment application. When the electronic mobile device retrieves the mobile payment code, the universal payment application provides a payment interface according to the retrieved mobile payment code. When the mobile payment code is the non-agreed payment code, the payment interface at least comprises a financial transaction trigger link and/or a universal payment link.

In one embodiment, the mobile payment code is a bar code or a QR code.

In one embodiment, the electronic mobile device includes an image capture module for retrieving the mobile payment code by an image capturing method.

In one embodiment, the electronic mobile device includes a wireless communication module for retrieving the mobile payment code by a wireless communication method.

In one embodiment, the financial transaction trigger link corresponds to a credit card transaction, a debit card transaction, a prepaid card transaction, a bank transfer transaction, or a prepaid account transaction.

In one embodiment, when the universal payment link is selected, the electronic mobile device performs a mobile payment through a universal payment platform corresponding to the universal payment application; and when the financial transaction trigger link is selected, the electronic mobile device performs the mobile payment through the universal payment platform or through a financial transaction platform corresponding to the financial transaction trigger link.

In one embodiment, the mobile payment code is a universal payment code, an agreed payment code or the non-agreed payment code, wherein the universal payment code is generated corresponding to the universal payment application, and the agreed payment code is generated not corresponding to the universal payment application but is recognizable by the universal payment application. When the mobile payment code is the universal payment code, the payment interface at least includes the universal payment link. When the mobile payment code is the agreed payment code, the payment interface at least includes the universal payment link and/or an agreed payment trigger link.

In one embodiment, when the universal payment link is selected, the electronic mobile device performs a mobile payment through a universal payment platform corresponding to the universal payment application; when the agreed payment trigger link is selected, the electronic mobile device activates an agreed payment application corresponding to the agreed payment code to perform the mobile payment, or the electronic mobile device performs the mobile payment through the universal payment platform; and when the financial transaction trigger link is selected, the electronic mobile device performs the mobile payment through the universal payment platform or through a financial transaction platform corresponding to the financial transaction trigger link.

As mentioned above, the mobile payment method of this invention includes the following steps of: starting a universal payment application; retrieving a mobile payment code, wherein the mobile payment code is a non-agreed payment code, and the non-agreed payment code is generated not corresponding to the universal payment application, and is not recognizable by the universal payment application; and the universal payment application providing a payment interface based on the retrieved mobile payment code, wherein when the mobile payment code is the non-agreed payment code, the payment interface at least includes a financial transaction trigger link and/or a universal payment link. Based on the above steps, when performing a mobile payment process, the user may use one single payment application (i.e., the universal payment application) to perform the mobile payment action. In this case, even if the provided mobile payment code in the mobile payment process is not a specific payment code (i.e., the universal payment code) generated corresponding to the specific payment application (i.e., the universal payment application), the user can still smoothly trigger subsequent actions of mobile payment. That is, the user can operate one single payment application to perform the mobile payment on any of various mobile payment platforms, and in particular, to perform the mobile payment on any of the non-agreed, non-contracted and/or non-registered mobile payment platforms. Therefore, the mobile payment method of this invention can avoid the complicated processes of installing multiple mobile payment applications and applying for corresponding accounts, and the complicated processes of applying for multiple mobile payment codes for different mobile payment platforms.

In addition, the mobile payment system of this invention includes a mobile payment code and an electronic mobile device. The mobile payment code is assigned to a first transaction party, and the mobile payment code is a non-agreed payment code. The electronic mobile device is assigned to a second transaction party and is installed with a universal payment application. The non-agreed payment code is generated not corresponding to the universal payment application, and is not recognizable by the universal payment application. When the electronic mobile device retrieves the mobile payment code, the universal payment application provides a payment interface according to the retrieved mobile payment code. When the mobile payment code is the non-agreed payment code, the payment interface at least comprises a financial transaction trigger link and/or a universal payment link. Based on the design of the mobile payment system, when performing a mobile payment process, the user may use one single payment application (i.e., the universal payment application) to perform the mobile payment action. In this case, even if the provided mobile payment code in the mobile payment process is not a specific payment code (i.e., the universal payment code) generated corresponding to the specific payment application (i.e., the universal payment application), the user can still smoothly trigger subsequent actions of mobile payment. That is, the user can operate one single payment application to perform the mobile payment on any of various mobile payment platforms, and in particular, to perform the mobile payment on any of the non-agreed, non-contracted and/or non-registered mobile payment platforms. Therefore, the mobile payment system of this invention can avoid the complicated processes of installing multiple mobile payment applications and applying for corresponding accounts, and the complicated processes of applying for multiple mobile payment codes for different mobile payment platforms.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a flow chart of a mobile payment method according to an embodiment of this invention;
FIG. 2 is a flow chart showing an implement aspect using the mobile payment method of FIG. 1;
FIG. 3 is a schematic diagram showing a mobile payment system according to an embodiment of this invention; and
FIGS. 4A to 4C are schematic diagrams showing different payment interfaces displayed on the electronic mobile device of the mobile payment system of FIG. 3.

### DETAILED DESCRIPTION OF THE INVENTION

The present invention will be apparent from the following detailed description, which proceeds with reference to the accompanying drawings, wherein the same references relate to the same elements.

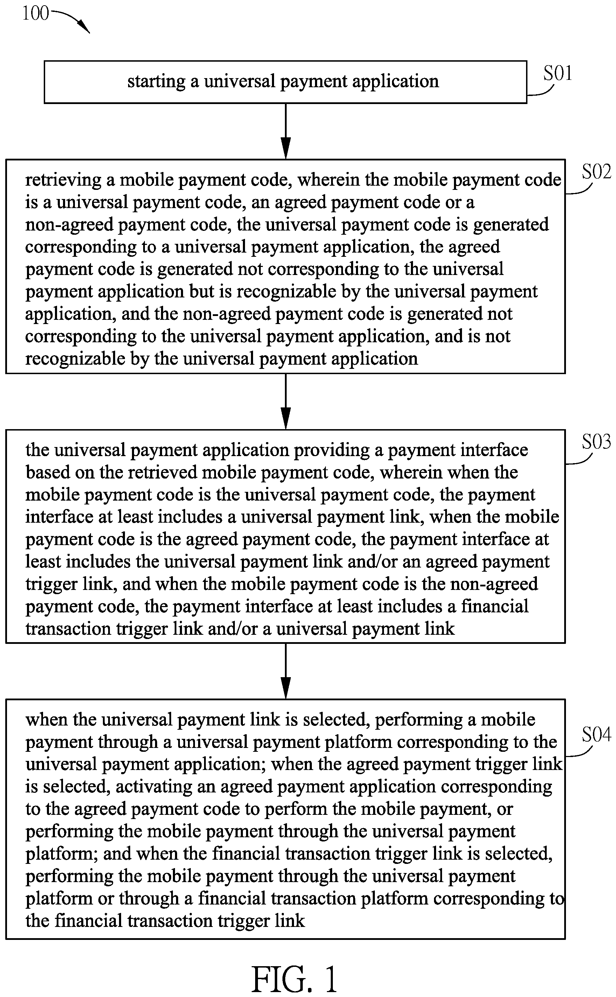

FIG. 1 is a flow chart of a mobile payment method according to an embodiment of this invention.

As shown in FIG. 1, the mobile payment method 100 of this embodiment includes the following steps of: starting a universal payment application (step S01); retrieving a mobile payment code, wherein the mobile payment code is a universal payment code, an agreed payment code or a non-agreed payment code, the universal payment code is generated corresponding to a universal payment application, the agreed payment code is generated not corresponding to the universal payment application but is recognizable by the universal payment application, and the non-agreed payment code is generated not corresponding to the universal payment application, and is not recognizable by the universal payment application (step S02); the universal payment application providing a payment interface based on the retrieved mobile payment code, wherein when the mobile payment code is the universal payment code, the payment interface at least includes a universal payment link, when the mobile payment code is the agreed payment code, the payment interface at least includes the universal payment link and/or an agreed payment trigger link, and when the mobile payment code is the non-agreed payment code, the payment interface at least includes a financial transaction trigger link and/or a universal payment link (step S03); and when the universal payment link is selected, performing a mobile payment through a universal payment platform corresponding to the universal payment application; when the agreed payment trigger link is selected, activating an agreed payment application corresponding to the agreed payment code to perform the mobile payment, or performing the mobile payment through the universal payment platform; and when the financial transaction trigger link is selected, performing the mobile payment through the universal payment platform or through a financial transaction platform corresponding to the financial transaction trigger link (step S04).

In this embodiment, the order of the step S01 and the step S02 can be reversed, and this invention is not limited thereto. For example, the step S01 can be performed first to start the universal payment application, and then the step S02 is performed to retrieve the mobile payment code. In another case, the step S02 can be performed first to retrieve the mobile payment code, and then he step S01 is performed to start the universal payment application.

In one embodiment, the mobile payment code can be any kind of applicable codes, such as, for example but not limited to, a one-dimensional code (e.g. a bar code) or a two-dimensional code (e.g. a QR code).

In the step S02, the action of retrieving the mobile payment code can be performed by any applicable method. For example, the step S02 may utilize an image capturing method to retrieve the image or picture of a mobile payment code (e.g. using a camera to scan a QR code), or utilize a wireless communication method to receive a wireless signal containing a mobile payment code (e.g. using a near-field communication to receive the signal). This invention is not limited thereto.

In this embodiment, the agreed payment code is generated not corresponding to the universal payment application but is recognizable by the universal payment application. Specifically, the agreed payment code can be, for example, generated by any of other payment applications, such as a platform-A payment code corresponding to a payment application A of a mobile payment platform A, a platform-B payment code corresponding to a payment application B of a mobile payment platform B, and the likes. The universal payment platform corresponding to the universal payment application may make a contract or agreement with the mobile payment platform A and the mobile payment platform B, so that the universal payment application can recognize the platform-A payment code or the platform-B payment code as an agreed payment code. To be noted, when the universal payment platform makes a contract or agreement with the mobile payment platform A and/or the mobile payment platform B, the universal payment application may expand the payment code recognition ability, so that the universal payment application can recognize (or decode) not only the universal payment code, but also the agreed payment code (e.g. the platform-A payment code and/or the platform-B payment code).

In addition, the non-agreed payment code is generated not corresponding to the universal payment application, and is not recognizable by the universal payment application. Specifically, the non-agreed payment code can be, for example, generated by any of other payment applications, such as a platform-C payment code corresponding to a payment application C of a mobile payment platform C, a platform-D payment code corresponding to a payment application D of a mobile payment platform D, and the likes. The universal payment platform corresponding to the universal payment application does not make a contract or agreement with the mobile payment platform C and the mobile payment platform D, so that the universal payment application cannot recognize the platform-C payment code or the platform-D payment code and thus determine that the platform-C payment code or the platform-D payment code is a non-agreed payment code.

In the step S04, when the universal payment link is selected, the mobile payment can be performed through the universal payment platform. For example, when the universal payment link is selected or clicked, it indicates that the mobile payment code is determined as the universal payment code, which is generated corresponding to the universal payment platform. Therefore, the universal payment platform can successfully finish the mobile payment action.

In addition, in the step S04, when the agreed payment trigger link is selected, an agreed payment application corresponding to the agreed payment code can be activated to perform the mobile payment, or the mobile payment can be performed through the universal payment platform. For example, when the agreed payment trigger link is selected, it indicates that the mobile payment code is determined as an agreed payment code (e.g. the platform-A payment code), which is generated according to the corresponding mobile payment platform (e.g. the mobile payment platform A), so that the corresponding mobile payment application (e.g. the mobile payment application A) is activated. Then, the mobile payment actions can be successfully finished through the corresponding mobile payment application and the corresponding mobile payment platform (e.g. the mobile payment platform A). In addition, even if the retrieved mobile payment code is an agreed payment code, the universal payment application can still be used to finished the mobile payment actions, which are performed by utilizing the universal payment platform to communicate with the agreed or contracted mobile payment platform (e.g. the mobile payment platform A or the mobile payment platform B).

Moreover, in the step S04, when the financial transaction trigger link is selected, the mobile payment can be performed through the universal payment platform or through a financial transaction platform corresponding to the financial transaction trigger link. For example, when the financial transaction trigger link is selected, it indicates that the mobile payment code is determined as a non-agreed payment code (e.g. the platform-C payment code), which is generated according to the corresponding mobile payment platform (e.g. the mobile payment platform C). In this case, the corresponding mobile payment application (e.g. the mobile payment application C) is not available to perform the mobile payment action. Therefore, the payment application of any applicable financial transaction platform can be activated to perform the payment action through the financial transaction platform by a credit card transaction, a debit card transaction, a prepaid card transaction, a bank transfer transaction, or a prepaid account transaction, or the like. In addition, even if the retrieved mobile payment code is a non-agreed payment code, the universal payment application can still be used to finish the mobile payment actions. For example, the universal payment platform can communicate with any applicable financial transaction platform (e.g. a financial institution such as a bank, a credit card center, or the like), and then the financial transaction platform can further communicate with the non-agreed mobile payment platform (e.g. the mobile payment platform C or the mobile payment platform D), thereby finishing the mobile payment actions. In another case, the financial institution may pay directly to the charger to complete the mobile payment action.

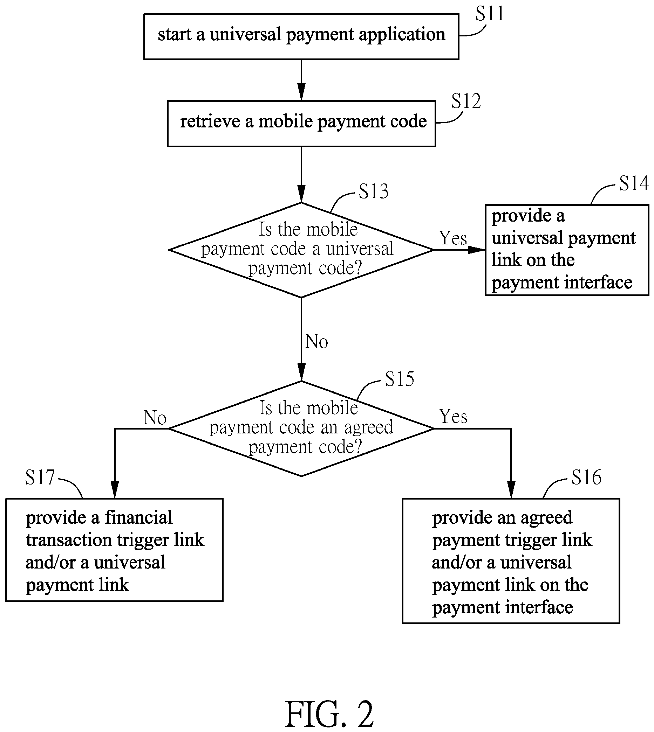

In order to make this embodiment clearer, a detailed procedure of an implement aspect of the mobile payment method of this embodiment will be described with reference to FIG. 2.

As shown in FIG. 2, the step S11 is to start a universal payment application, and then the step S12 is to retrieve a mobile payment code. To be noted, the above description is an example only, and the order of the step S11 and the step S12 is not limited. For example, the step S12 of retrieving a mobile payment code can be performed before the step S11, which is to start a universal payment application corresponding to the retrieved mobile payment code. In addition, in one embodiment, the step S11 and step S12 can be finish at the same time. For example, an identification process or program can be installed in a firmware of the camera module of the mobile device. Accordingly, when the camera module captures the image of a payment code (e.g. a QR code), the identification of the payment code can be finished simultaneously. In practice, when the user operates the electronic mobile device (e.g. a mobile phone) to scan the payment code, the electronic mobile device can simultaneously show the image of the scanned payment code and the identification result (e.g. the web address or the payment path).

Afterwards, the step S13 is to determine whether the mobile payment code is a universal payment code or not. When the step S13 determines that the mobile payment code is a universal payment code, the step S14 will be performed to provide a universal payment link on the payment interface. In this embodiment, after the step S14, the above-mentioned step S04 can be performed to select the universal payment link so as to perform a mobile payment through a universal payment platform corresponding to the universal payment application. The description thereof can be referred to the above embodiment, so the detail description will be omitted.

When the step S13 determines that the mobile payment code is not a universal payment code, the step S15 will be performed to determine whether the mobile payment code is an agreed payment code or not. Then, when the step S15 determines that the mobile payment code is an agreed payment code, the step S16 will be performed to provide an agreed payment trigger link and/or a universal payment link on the payment interface. In this case, the payment interface provides, for example, an agreed payment trigger link and a universal payment link. In this embodiment, after the step S16, the above-mentioned step S04 can be performed to select the agreed payment trigger link or the universal payment link so as to perform a mobile payment. The description thereof can be referred to the above embodiment, so the detail description will be omitted.

When the step S15 determines that the mobile payment code is not an agreed payment code, it indicates that the mobile payment code is a non-agreed payment code. Accordingly, the step S17 will be performed to provide a financial transaction trigger link and/or a universal payment link. In this case, the payment interface provides, for example, a financial transaction trigger link and a universal payment link. In this embodiment, after the step S17, the above-mentioned step S04 can be performed to select the financial transaction trigger link and the universal payment link so as to perform a mobile payment. The description thereof can be referred to the above embodiment, so the detail description will be omitted.

As mentioned above, the mobile payment method of this invention includes the following steps of: starting a universal payment application; retrieving a mobile payment code, wherein the mobile payment code is a universal payment code, an agreed payment code or a non-agreed payment code; the universal payment application providing a payment interface based on the retrieved mobile payment code, wherein the payment interface at least includes a universal payment link, an agreed payment trigger link, and/or a financial transaction trigger link; and when the universal payment link is selected, performing a mobile payment through a universal payment platform corresponding to the universal payment application; when the agreed payment trigger link is selected, activating an agreed payment application corresponding to the agreed payment code to perform the mobile payment, or performing the mobile payment through the universal payment platform; and when the financial transaction trigger link is selected, performing the mobile payment through the universal payment platform or through a financial transaction platform corresponding to the financial transaction trigger link. Based on the above steps, when performing a mobile payment process, the user may use one single payment application (i.e., the universal payment application) to perform the mobile payment action. In this case, even if the provided mobile payment code in the mobile payment process is not a specific payment code (i.e., the universal payment code) generated corresponding to the specific payment application (i.e., the universal payment application), the user can still smoothly trigger subsequent actions of mobile payment. That is, the user can operate one single payment application to perform the mobile payment on any of various mobile payment platforms, and in particular, to perform the mobile payment on any of the non-agreed, non-contracted and/or non-registered mobile payment platforms. Therefore, the mobile payment method of this invention can avoid the complicated processes of installing multiple mobile payment applications and applying for corresponding accounts, and the complicated processes of applying for multiple mobile payment codes for different mobile payment platforms.

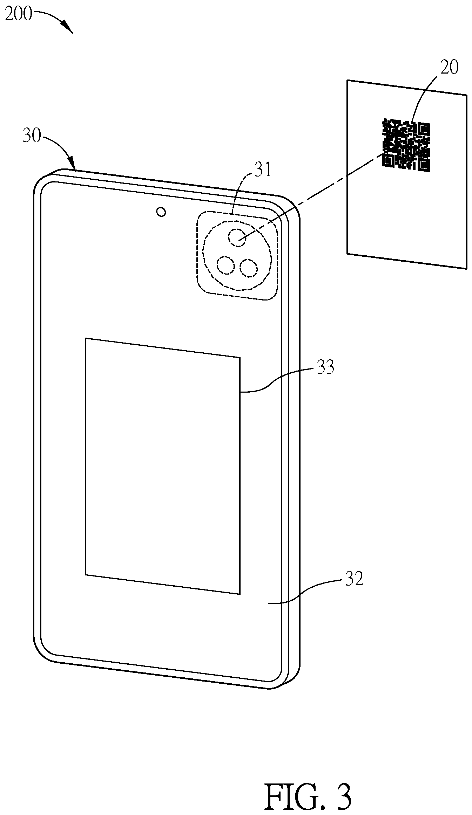

In addition, a mobile payment system 200 according to an embodiment of this invention will be described hereinafter with reference to FIG. 3. In this embodiment, the mobile payment system 200 can implement the above-mentioned mobile payment method 100.

As shown in FIG. 3, the mobile payment system 200 includes a mobile payment code 20 and an electronic mobile device 30.

In this embodiment, the mobile payment code 20 is assigned to a first transaction party, such as a charger (e.g. a store), and the mobile payment code 20 can be, for example but not limited to, a universal payment code, an agreed payment code or a non-agreed payment code. In this embodiment, the mobile payment code 20 can be, for example but not limited to, a one-dimensional code (e.g. barcode) or a two-dimensional code (e.g. QR code). In this case, the mobile payment code 20 is a QR code. In addition, the mobile payment code 20 can be a physical QR code printed on any carrier (such as paper, business cards, etc.) or a virtual QR code displayed on an electronic display. To be noted, this invention is not limited thereto. In this case, the mobile payment code 20 is a QR code printed on a business card as an example.

As shown in FIG. 3, the electronic mobile device 30 is assigned to a second transaction party, such as a payer (e.g. a consumer), and is installed with a universal payment application. In this embodiment, the universal payment application can correspond to the aforementioned universal payment code. That is, the universal payment code is generated corresponding to the universal payment application.

For example, the electronic mobile device 30 can be, for example but not limited to, the consumer's mobile phone or a smart watch, which at least includes an image capture module 31 and a display module 32. In this case, the image capture module 31 may be, for example, a camera module of the mobile phone, which can retrieve the mobile payment code 20 by using the image capturing method. It should be noted that the above description is only an example and is not intended to limit the present invention. In another embodiment, the electronic mobile device 30 may include a wireless communication module, such as a near-field communication (NFC) module. In this case, the electronic mobile device 30 may utilize a wireless communication method (e.g. near-field communication) to retrieve the mobile payment code 20.

In addition, the display module 32 can be, for example, a display module of a mobile phone, such as an LCD display module, an OLED display module, etc. In this case, the display module 32 can be used to display the payment interface 33 provided by the universal payment application based on the captured mobile payment code 20. To be noted, the above description is only an example and is not intended to limit the present invention.

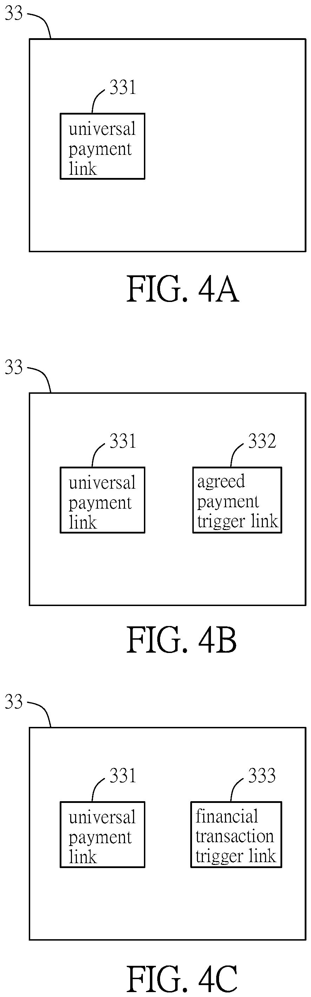

Referring to FIGS. 2, 3 and 4A to 4C, when the step S13 determines that the mobile payment code 20 is the universal payment code, the step S14 will be performed to provide a universal payment link 331 on the payment interface 33 (as shown in FIG. 4A). Accordingly, the consumer can select or click the universal payment link 331 to perform the mobile payment action. The detailed description thereof can be referred to the above-mentioned embodiments and will be omitted here. To be noted, the above description is only an example and is not intended to limit the present invention.

Furthermore, when the step S15 determines that the mobile payment code 20 is an agreed payment code, the step S16 is then performed to provide an agreed payment trigger link 332 and/or a universal payment link 331 on the payment interface 33. In this embodiment, as shown in FIG. 4B, the payment interface 33 provides both an agreed payment trigger link 332 and a universal payment link 331. Therefore, the consumer can select or click the agreed payment triggering link 332 or the universal payment link 331 to perform the mobile payment action. The detailed description thereof can be referred to the above-mentioned embodiments and will be omitted here. To be noted, the above description is only an example and is not intended to limit the present invention.

Moreover, when the step S15 determines that the mobile payment code 20 is a non-agreed payment code, the step S17 can then be performed to provide a financial transaction trigger link 333 and/or a universal payment link 331 on the payment interface 33. In this embodiment, as shown in FIG. 4C, the payment interface 33 provides both a financial transaction trigger link 333 and a universal payment link 331. Therefore, the consumer can select or click the financial transaction triggering link 333 or the universal payment link 331 to perform the mobile payment action. The detailed description thereof can be referred to the above-mentioned embodiments and will be omitted here. To be noted, the above description is only an example and is not intended to limit the present invention.

An application of the mobile payment method and system of this embodiment will be described below with a scenario example. For example, when a consumer travels to another country and is going to make a purchase, such as when an American consumer travels to Asia and is going to make a purchase at a local store, the consumer's mobile phone may not use the local mobile payment available at the local store. Therefore, the consumer can only pay with cash or use a physical credit card. In other words, although the consumer intends to pay with mobile payment and the local store can charge through mobile payment, due to the mobile payment platforms of the consumer and the local store are different, the result is that both parties are unable to complete the transaction through mobile payment. In this case (especially when a foreign tourist intends to make a purchase at a local store in another country), the mobile payment method and system of this embodiment can be applied, in which the mobile payment code provided by the local store can be defined as the non-agreed payment code of this embodiment. Therefore, through the aforementioned step S17, the consumer (i.e., a foreign tourist or a second transaction party) can successfully make a mobile payment at the local store (i.e., a first transaction party that provides the mobile payment code).

In summary, the mobile payment system of this invention includes a mobile payment code and an electronic mobile device. The mobile payment code is assigned to a first transaction party, and the mobile payment code is a universal payment code, an agreed payment code or a non-agreed payment code. The electronic mobile device is assigned to a second transaction party, and is installed with a universal payment application. The universal payment code is generated corresponding to a universal payment application, the agreed payment code is generated not corresponding to the universal payment application but is recognizable by the universal payment application, and the non-agreed payment code is generated not corresponding to the universal payment application and is not recognizable by the universal payment application. When the electronic mobile device retrieves the mobile payment code, the universal payment application provides a payment interface according to the retrieved mobile payment code. When the mobile payment code is the universal payment code, the payment interface at least includes a universal payment link. When the mobile payment code is the agreed payment code, the payment interface at least includes the universal payment link and/or an agreed payment trigger link. When the mobile payment code is the non-agreed payment code, the payment interface at least includes a financial transaction trigger link and/or a universal payment link. Based on the design of the mobile payment system, when performing a mobile payment process, the user may use one single payment application (i.e., the universal payment application) to perform the mobile payment action. In this case, even if the provided mobile payment code in the mobile payment process is not a specific payment code (i.e., the universal payment code) generated corresponding to the specific payment application (i.e., the universal payment application), the user can still smoothly trigger subsequent actions of mobile payment. That is, the user can operate one single payment application to perform the mobile payment on any of various mobile payment platforms, and in particular, to perform the mobile payment on any of the non-agreed, non-contracted and/or non-registered mobile payment platforms. Therefore, the mobile payment system of this invention can avoid the complicated processes of installing multiple mobile payment applications and applying for corresponding accounts, and the complicated processes of applying for multiple mobile payment codes for different mobile payment platforms.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A mobile payment method, comprising:
starting a universal payment application;
retrieving a mobile payment code, wherein the mobile payment code is a non-agreed payment code, and the non-agreed payment code is generated not corresponding to the universal payment application, and is not recognizable by the universal payment application; and
the universal payment application providing a payment interface based on the retrieved mobile payment code;
wherein, when the mobile payment code is the non-agreed payment code, the payment interface at least comprises a financial transaction trigger link and/or a universal payment link.

2. The mobile payment method of claim 1, wherein the mobile payment code is a bar code or a QR code.

3. The mobile payment method of claim 1, wherein the step of retrieving the mobile payment code is to retrieve the mobile payment code by an image capturing method or by a wireless communication method.

4. The mobile payment method of claim 1, wherein the financial transaction trigger link corresponds to a credit card transaction, a debit card transaction, a prepaid card transaction, a bank transfer transaction, or a prepaid account transaction.

5. The mobile payment method of claim 1, further comprising:
when the universal payment link is selected, performing a mobile payment through a universal payment platform corresponding to the universal payment application; and
when the financial transaction trigger link is selected, performing the mobile payment through the universal payment platform or through a financial transaction platform corresponding to the financial transaction trigger link.

6. The mobile payment method of claim 1, wherein the mobile payment code is a universal payment code, an agreed payment code or the non-agreed payment code, the universal payment code is generated corresponding to the universal payment application, the agreed payment code is generated not corresponding to the universal payment application but is recognizable by the universal payment application;
when the mobile payment code is the universal payment code, the payment interface at least comprises the universal payment link; and
when the mobile payment code is the agreed payment code, the payment interface at least comprises the universal payment link and/or an agreed payment trigger link.

7. The mobile payment method of claim 6, further comprising:
when the universal payment link is selected, performing a mobile payment through a universal payment platform corresponding to the universal payment application;
when the agreed payment trigger link is selected, activating an agreed payment application corresponding to the agreed payment code to perform the mobile payment, or performing the mobile payment through the universal payment platform; and
when the financial transaction trigger link is selected, performing the mobile payment through the universal payment platform or through a financial transaction platform corresponding to the financial transaction trigger link.

8. A mobile payment system, comprising:
a mobile payment code assigned to a first transaction party, wherein the mobile payment code is a non-agreed payment code; and
an electronic mobile device assigned to a second transaction party and installed with a universal payment application, wherein the non-agreed payment code is generated not corresponding to the universal payment application, and is not recognizable by the universal payment application, and when the electronic mobile device retrieves the mobile payment code, the universal payment application provides a payment interface according to the retrieved mobile payment code, and
wherein, when the mobile payment code is the non-agreed payment code, the payment interface at least comprises a financial transaction trigger link and/or a universal payment link.

9. The mobile payment system of claim 8, wherein the mobile payment code is a bar code or a QR code.

10. The mobile payment system of claim 8, wherein the electronic mobile device comprises an image capture module for retrieving the mobile payment code by an image capturing method.

11. The mobile payment system of claim 8, wherein the electronic mobile device comprises a wireless communication module for retrieving the mobile payment code by a wireless communication method.

12. The mobile payment system of claim 8, wherein the financial transaction trigger link corresponds to a credit card transaction, a debit card transaction, a prepaid card transaction, a bank transfer transaction, or a prepaid account transaction.

13. The mobile payment system of claim 8, wherein:
when the universal payment link is selected, the electronic mobile device performs a mobile payment through a universal payment platform corresponding to the universal payment application; and
when the financial transaction trigger link is selected, the electronic mobile device performs the mobile payment through the universal payment platform or through a financial transaction platform corresponding to the financial transaction trigger link.

14. The mobile payment system of claim 8, wherein the mobile payment code is a universal payment code, an agreed payment code or the non-agreed payment code, the universal payment code is generated corresponding to the universal payment application, the agreed payment code is generated not corresponding to the universal payment application but is recognizable by the universal payment application;
when the mobile payment code is the universal payment code, the payment interface at least comprises the universal payment link; and
when the mobile payment code is the agreed payment code, the payment interface at least comprises the universal payment link and/or an agreed payment trigger link.

15. The mobile payment system of claim 8, wherein:
when the universal payment link is selected, the electronic mobile device performs a mobile payment through a universal payment platform corresponding to the universal payment application;
when the agreed payment trigger link is selected, the electronic mobile device activates an agreed payment application corresponding to the agreed payment code to perform the mobile payment, or the electronic mobile device performs the mobile payment through the universal payment platform; and
when the financial transaction trigger link is selected, the electronic mobile device performs the mobile payment through the universal payment platform or through a financial transaction platform corresponding to the financial transaction trigger link.
